# EUROPÄISCHE PATENTSCHRIFT

(11) **EP 1 934 593 B1**
(45) Veröffentlichungstag und Bekanntmachung des Hinweises auf die Patenterteilung: **21.03.2012**
(21) Anmeldenummer: 06774756.8
(22) Anmeldetag: 31.08.2006
(51) Int. Cl.: G01N 30/02, B01J 20/10

(54) **FÜLLMATERIAL FÜR EINE MIKRO-ADSORPTIONSSÄULE ZUM TROCKNEN UND/ODER REINIGEN VON GELÖSTEN, ORGANISCHEN BZW. BIOLOGISCHEN ANALYTEN SOWIE MIKRO-ADSORPTIONSSÄULE UND VERWENDUNG DERSELBEN**
PACKING MATERIAL FOR A MICRO-ADSORPTION COLUMN FOR DRYING AND/OR PURIFICATION OF DISSOLVED ORGANIC OR BIOLOGICAL ANALYTES AND MICRO-ADSORPTION COLUMN AND USE THEREOF
CHARGE DESTINEE A UNE COLONNE DE MICRO-ADSORPTION CONÇUE POUR SECHER ET/OU LAVER DES ANALYTES ORGANIQUES OU BIOLOGIQUES DISSOUS, COLONNE DE MICRO-ADSORPTION ET UTILISATION

(30) Priorität: 12.09.2005 AT 14982005
(43) Veröffentlichungstag der Anmeldung: 25.06.2008
(73) Patentinhaber: Erber Aktiengesellschaft, 3130 Herzogenburg (AT)
(72) Erfinder: FREUDENSCHUSS, Martin, A-3370 Ybbs (AT); JANNECKER, Günther, A-3430 Tulln (AT); KRSKA, Rudolf, A-3430 Tulln (AT); BINDER, Eva, Maria, A-7501 Unterwart 269 (AT)
(74) Vertreter: Cunow, Gerda
(86) Internationale Anmeldenummer: PCT/AT2006/000358
(87) Internationale Veröffentlichungsnummer: WO 2007/030847

(56) Entgegenhaltungen:
- US-B1- 6 541 273

## Beschreibung

Die vorliegende Erfindung bezieht sich auf ein Füllmaterial für eine Mikro-Adsorptionssäule zum Trocknen und Reinigen von gelösten, organischen bzw. biologischen Analyten, wie Toxinen, Antibiotika, Vitaminen, Hormonen, Pestiziden und dgl., enthaltend wenigstens ein Trockenmittels, eine damit befüllte Mikro-Adsorptionssäule sowie eine Verwendung desselben.

In der organischen bzw. analytischen Chemie besteht häufig das Problem, dass sehr kleine Substanzmengen für weitere Untersuchungen bzw. Nachweisverfahren vor ihrem Einsatz in dem Nachweisverfahren einer Trocknung und/oder Reinigung oder auch Derivatisierung unterzogen werden müssen, um die nachfolgenden Verfahrensschritte nicht zu stören bzw. um nicht übermäßige Mengen an Verunreinigungen und/oder Wasser in die nachfolgenden Verfahren einzubringen, wodurch diese Herfahren einerseits gestört werden können bzw. die damit erzielbaren Ergebnisse in keiner Weise mehr repräsentativ sind.

Aus der US-B 6,541,273 ist ein Verfahren und eine Vorrichtung zum Detektieren von Pestiziden entnehmbar, bei welchen konzentrierte Proben enthaltende Pestizide auf eine Festphasenextraktionskartusche aufgegeben werden, in welcher Kartusche ein Trockenmittel, wie z.B. Natriumsulfat, Magnesiumsulfat, ein Molekularsieb und dgl. gemeinsam mit einem Träger enthalten ist, wodurch nach Überleiten der Probe über die Kartusche das Eluat, enthaltend die Pestizide, einem Nachweisschritt unterworfen werden kann.

Zur Reinigung von keinen, gelösten Substanzmenge wurde beispielsweise in der US-A 4,895,808 bzw. US-A 5,110,558 ein verfahren und eine Vorrichtung zur Adsorption und Detektion von Adsorbentien oder Analyten vorgeschlagen, wobei diesen Verfahren eine spezielle Vorrichtung, bestehend aus einer Kombination von Röhrchen, zugrunde liegt, in welcher in einem Außenröhrchen der gelöste Analyten eingebracht ist, in welches Außenröhrchen unter Reibung ein mit einer Fritte versehenes, zweites Röhrchen eingeschoben wird, in welchem zweiten Röhrchen Reinigungs- bzw. Trocknungsmaterialien gegebenenfalls geschichtet enthalten sind. Mit einer derartigen Vorrichtung sollte die Reinigung und/oder Trocknung von organischen bzw. biologischen Analyten bis zu einem gewissen Ausmaß gelingen, wobei eine derart vorgereinigte Substanz nachfolgend in Bezug auf die Anwesenheit von speziellen Analyten untersucht werden sollte. Die Vorrichtung und das Verfahren, wie sie der US-A 4,895,808 bzw. US-A 5,110,558 beschrieben sind, weisen jedoch den Nachteil auf, dass zwar mit dieser Vorrichtung eine teilweise Reinigung der Analyten erzielbar ist, jedoch eine Trocknung und/oder Reinigung der zu untersuchenden Probenlösungen nicht gelingen kann, da ein effizienter Einsatz von Trockenmittel in derartigen Säulen nicht möglich ist, da diese Säulen bei Kontaktieren von wasserhaltigen Flüssigkeiten sofort verlegen bzw. schlecht durchlässig sind und keinerlei sinnvolle Aufreinigung und insbesondere eine nachfolgend häufig erforderliche Derivatisierung der zu untersuchenden Analytenlösung mehr möglich scheint.

Auch bei herkömmlichen säulenchromatografischen Analyseverfahren, bei welchen Analyten auf eine konditionierte Säule aufgebracht werden und mit einem Elutionsmittel aus dieser Säule wiederum mit oder ohne Anwendung von Druck ausgewaschen bzw. ausgebracht werden, existieren ähnliche Probleme, dass derartige Säulen zwar mit entsprechenden Reinigungsmaterialien gepackt werden können, dass jedoch eine sinnvolle Reinigung und Trocknung insbesondere durch Vorsehen eines Trockenmittels in derartigen Analysensäulen sinnvoll nicht möglich erscheint, da auch hier die Säulen sofort bei Aufbringen von wasserhaltigen Lösungen verpacken und eine weitere Auftrennung bzw. sinnvolle Elutionsgeschwindigkeit der zu untersuchenden Substanzen nicht mehr möglich scheint.

Es wurde daher in der Vergangenheit die Verfahrensführung so gewählt, dass zu untersuchende Analytenlösungen in einem ersten Schritt über spezielle Reinigungsmaterialien entweder in Mikrosäulen gemäß der USA 4,895,808 bzw. US-A 5,110,558 bzw, über herkömmliche HPLC-, LC- oder sonstige präparative bzw. analytische Säulen geleitet werden und die aus diesen Säulen abgezogenen, gereinigten Analytenlösungen bzw. aufgetrennten Anazytenlösungen nachfolgend einer herkömmlichen Trocknung entweder durch Abdampfen der Lösungsmittel oder Zusatz von Überschussmengen an Trockenmittel zu der organischen Lösung getrocknet werden, worauf für eine weitere Analyse der Substanz diese entweder wieder aus dem Trockenmittel ausgewaschen werden muss oder mit einem wasserfreien Lösungsmittel aufgenommen werden muss, um sie einem nachfolgenden Analyseverfahren zuzuführen. Diese Verfahrensführung, welche eine sinnvoll gereinigte und/oder getrocknete Probe zur Verfügung stellt, ist extrem zeitaufwendig, was in der modernen Analytik, welche Schnellanalysen bzw. Schnelltests auf gefährliche Substanzen durchführen soll bzw. muss, einen unnötigen Verfahrens- und Zeitaufwand darstellt, welcher in keinem Verhältnis zu der geforderten Geschwindigkeit bzw. Reinheit von gewünschten Proben steht.

Die vorliegende Erfindung zielt daher darauf ab, ein Füllmaterial für eine Mikro-Adsorptionssäule zum Trocknen und Reinigen von gelösten, organischen bzw. biologischen Analyten, wie Toxinen, Antibiotika, Vitaminen, Hormonen, Pestiziden und dgl., zur verfügung zu stellen, welches die Nachteile des Standes der Technik, dass in einer einstufigen Reaktion eine Trocknung und Reinigung durchgeführt werden kann, vermeidet und andererseits ein Verlegen der Säule durch in den Lösungsmitteln enthaltene Feuchtigkeit bzw. enthaltenes Wasser mit Sicherheit hintangehalten ist.

Weiters zielt die Erfindung auf das Bereitstellen einer Mikro-Adsorptionssäule ab, mit welcher überaus rasch eine gleichzeitige Trocknung und Reinigung von in organischen, wässrigen Lösungsmitteln gelösten Analyten möglich ist, ohne dass die eingesetzte Adsorptionssäule durch in dem Lösungsmittel enthaltene Feuchtigkeit verlegt wird bzw. die in dem Lösungsmittel enthaltene Feuchtigkeit auch in die zu analysierende Probe ausgetragen wird und dass eine nachfolgende Derivatisierung der zu untersuchenden Analyten ohne Störung und zusätzliche Reinigungsschritte möglich ist.

Zur Lösung dieser Aufgabe ist das erfindungsgemäße Füllmaterial für eine Mikro-Adsorptionssäule im wesentlichen dadurch gekennzeichnet, dass das Füllmaterial für eine Mikro-Adsorptionssäule Magnesiumsulfat und wenigstens ein weiteres Trockenmittel, gewählt aus der Gruppe, enthaltend Aluminiumoxid, Calciumchlorid, Calciumhydrid, Calciumoxid, Calciumsulfat, Kaliumhydrid, Kieselgel, Kupfersulfat, Magnesiumoxid, Magnesiumperchlorat, Molekularsiebe, Natriumhydroxid, Phosphorpentoxid, Schwefelsäure auf Silikat, Phosphorpentoxid auf Silikat, sowie 0,5 bis 90 Gew.-% eines natürlich vorkommenden oder synthetischen Trägers mit großer, innerer Oberfläche, gewählt aus Zeolithen, Diatomeenerden, Bentonit oder Siliziumdioxid, enthält und dass das Füllmaterial für eine Mikro-Adsorptionssäule zusätzlich wenigstens ein Adsorbens bzw. Reinigungsmittel, gewählt aus der Gruppe, enthaltend zyklische, geradkettige oder verzweigte, mit Phenyl, Cyclohexyl, Butyl, Ethyl, Methyl, Cyanopropyl, Diol, Carboxylat, Benzolsulfoxylat, Aminopropyl, primären, sekundäre, tertiären oder quaternären Aminoresten oder Diethylamin substituierte C₈- oder C₁₈-Kohlenwasserstoffe; neutrales, saures oder basisches Aluminiumoxid, Ionentauscher, Kieselgel, Aktivkohle oder Magnesiumsilikat, sowie gegebenenfalls ein oder mehrere Trockenmittel, gewählt aus der Gruppe, enthaltend Calciumhydrid, Calciumoxid, Calciumsulfate, Kaliumhydrid, Kieselgel, Magnesiumoxid, Magnesiumperchlorat, Natriumhydroxid, Phsopharpentoxid, Schwefelsäure auf Silikat, Phosphorpentoxid auf Silikat enthält. Indem als Füllmaterial für eine Mikro-Adsorptionssäule eine Mischung aus Magnesiumsulfat und wenigstens einem weiteren Trockenmittel, bevorzugter wenigstens zwei Trockenmitteln, sowie 0,5 bis 90 Gew.-% eines natürlich vorkommenden oder synthetischen Trägers mit großer, innerer Oberfläche eingesetzt. wird, gelingt es, die Trockenkapazität des Trockenmittels durch Verteilung des Trockenmittels auf dem natürlich vorkommenden oder synthetischen Träger mit großer, innerer Oberfläche derart zu gestalten, dass die gesamte Oberfläche des Trockenmittels für die Reaktion mit der in der Lösung enthaltenen Feuchtigkeit zur Verfügung gestellt wird und nicht, wie dies im Stand der Technik üblich ist, die Oberfläche des Trockenmittels reagiert und das restliche Trockenmittel von der Feuchtigkeit in der Lösung nicht erreicht werden kann, da die Oberfläche bereits eine dichte, mit Feuchtigkeit umgesetzte Schicht ausbildet und das restliche Trockenmittel nicht zur Reaktion gelangen kann. Darüber hinaus wirkt der natürlich vorkommende oder synthetische Träger mit großer, innerer Oberfläche als Adsorbens für die verschiedensten, in der den organischen bzw. biologischen Analyten enthaltenen Lösung, so dass neben der Trocknung, welche bereits eine Reinigung der Lösung darstellt, auch eine darüber hinaus gehende Reinigung durch Entfernung von an den Träger mit großer, innerer Oberfläche angelagerten, schädlichen Substanzen erzielbar ist.

Indem das Säulenfüllmaterial zusätzlich wenigstens ein Adsorbens bzw. Reinigungsmittel enthält, kann die gelöste, organische bzw. biologische Probe bzw. der Analyten neben einer effizienten Trocknung bzw. Adsorption von Verunreinigungen auch chemisch gereinigt werden, wodurch durch Einsatz eines einzigen Säulenfüllmaterials sämtliche, einen nachfolgenden Nachweis bzw. eine Analyse störende Substanzen gleichzeitig entfernt werden können und ein Füllmaterial für eine Mikro-Adsorptionssäule zur Verfügung gestellt wird, welches eine insbesondere rasche und effiziente Reinigung und Trocknung oder auch Derivatisierung für einen nachfolgenden Nachweis des gelösten Analyten ermöglicht. Schließlich wird hiedurch insbesondere eine nachfolgende Derivatisierung des Analyten ohne weitere Aufreinigung oder Trocknung ermöglicht.

Bei Einsatz eines Säulenfüllmaterials, welches neben einem Träger ein Gemisch aus verschiedenen Trockenmittel enthält, wird auch eine besonders effiziente Trocknung der gelösten, organischen bzw. biologischen Analyten, zur Verfügung gestellt und gleichzeitig kann mit einem derartigen Säulenfüllmaterial insbesondere dann, wenn höhere Mengen an natürlichem bzw. synthetischem Träger mit großer, innerer Oberfläche enthalten sind, beispielsweise auch eine Auf - schlämmung aufgereinigt werden, da an dem Träger mit großer, innerer Oberfläche feste Partikel, welche in dieser Aufschlämmung enthalten sind, mit Sicherheit zurückgehalten werden können.

Gemäß einer Weiterbildung der Erfindung ist das Füllmaterial für eine Mikro-Adsorptionssäule so ausgebildet, dass es 5 - 70 Gew.-% Träger enthält. Durch Einsatz eines breiten Spektrums des Trägers mit großer, innerer Oberfläche kann das Trocknungs- bzw. Reinigungsverhalten des Säulenfüllmaterials entsprechend gesteuert werden, wobei Säulenfüllmaterialien, welche hohe Mengen an Träger mit großer, innerer Oberfläche enthalten, eine deutlich verbesserte Reinigungswirkung neben der Trockenwirkung zeigen, und Füllmaterialien für eine Mikro-Adsorptionssäule, welche nur geringe Anteile an Träger mit großer, innerer Oberfläche zeigen, insbesondere eine stark verbesserte Trockenwirkung gegenüber dem Einsatz des reinen Trockenmittels allein zeigen, was wiederum dem zuvor beschriebenen Auflockerungseffekt des Trockenmittels zugeschrieben wird.

Eine besonders effiziente Trocknung bei gleichzeitiger Aufreinigung der gelösten, organischen bzw. biologischen Analyten wird mit einem Füllmaterial für eine Mikro-Adsorptionssäule erreicht, welches aus 0,5 bis 90 Gew.-% Träger, 20 bis 60 Gew.-% Magnesiumsulfat, 20 bis 60 Gew.-% Kaliumcarbonat und 10 bis 35 Gew.-% Calciumchlorid besteht. Mit einem derartigen Säulenfüllmaterial können gelöste, organische bzw. biologische Analyten getrocknet und gereinigt werden, welche auch höhere Wassergehalte, wie beispielsweise 20 bis. 30 % H₂O, in der Lösung enthalten, getrocknet werden, ohne dass ein Verpacken bzw. Verlegen der Säule durch mit Wasser umgesetztes, verklumptes Trockenmittel bewirkt wird.

Für einen besonders effizienten Einsatz der einzelnen, in dem Füllmaterial für eine Mikro-Adsorptionssäule enthaltenen Substanzen wird gemäß einer bevorzugten Weiterbildung der Erfindung das Säulenfüllmaterial in Form von Schichten eingesetzt. Bei einem derartigen Einsatz in Form von Schichten kann beispielsweise in einer Säule zuerst eine Trockenmittelschicht und dann eine Adsorbens- bzw. Reinigungsmittelschicht vorliegen und umgekehrt. Mit einer derartigen verfahrensführung kann auf die einzelnen, in den jeweiligen Schichten enthaltenen Substanzen Rücksicht genommen werden, um beispielsweise bei Substanzen in einer reinigungsmittelhaltigen Schicht, welche OH-Gruppen bzw. geringe Mengen an Wasser für eine effiziente Wirkung erfordern, einen in einem organischen Lösungsmittel gelösten Analyten durchzuleiten, wobei das Lösungsmittel auch wasserhaltig ist, und erst nachfolgend eine Trocknung hintanzusetzen, und andererseits bei Substanzen, welche für ihre Wirkung keinerlei Wasser benötigen, zuerst eine Trocknung des organischen Lösungsmittels, in welchem der Analyten gelöst ist, vorzunehmen und dann erst eine weitere Aufreinigung von störenden Substanzen vorgenommen wird. Mit einem derartigen Säulenfüllmaterial kann eine insbesondere effiziente und vollständige Reinigung bzw. Trocknung des in einem organischen Lösungsmittel gelösten Analyten bzw. der biologischen Substanz erzielt werden, wodurch eine nachfolgende Derivatisierung mit wasserempfindlichen Reagentien ohne weitere Aufreinigung möglich ist.

Gemäß einer Weiterbildung der vorliegenden Erfindung ist das Füllmaterial für eine Mikro-Adsorptionssäule derart ausgebildet, dass das Säulenfüllmaterial wenigstens eine Reinigungs- bzw. Adsorbensschicht, bestehend aus einem Gemisch aus 0,5 bis 90 Gew.-% Träger, gegebenenfalls Kieselgel und wenigstens einem zyklischen, geradkettigen oder verzweigten, mit Phenyl, Cyclohexyl, Butyl, Ethyl, Methyl, Cyanopropyl, Diol, Carboxylat, Benzolsulfoxylat, Aminopropyl, primären, sekundären, tertiären oder quaternären Aminoresten oder Diethylamin substituiertem C₈- oder C₁₈-Kohlenwasserstoff, sowie wenigstens eine Trockenmittelschicht, bestehend aus 0,5 bis 90 Gew.-% Träger und Rest Trockenmittel, enthält. Durch Einsatz von Säulenfüllmaterialien in Schichtform, welche unter anderem C₈- oder C₁₈-Kohlenwasserstoffe, substituiert oder unsubstituiert, enthalten, sogenannte "Reversed Phase" Materialien sowie einen Träger, bestehend aus einer synthetischen bzw. natürlich vorkommenden Substanz mit großer, innerer Oberfläche, sowie einer weiteren Schicht, welche einen identen bzw. analogen Träger aus einer synthetischen bzw. natürlichen Substanz mit großer, innerer Oberfläche sowie ein Trockenmittel enthält, gelingt eine effiziente, vollständige Aufreinigung und Trocknung von in organischen Lösungsmitteln gelösten Analyten. Insbesondere durch Einsatz der sogenannten Reversed Phase Materialien kann, wie dies an sich bekannt ist, eine Abtrennung von schädlichen bzw. eine Analyse störenden Substanzen gut und effizient erzielt werden, wobei weitere Substanzen, wie insbesondere Feststoffpartikel, an dem Träger angelagert werden und in der Folge sämtliches Wasser, welches in dem organischen Lösungsmittel enthalten ist, durch Durchleiten der Lösung über die Trockenmittelschicht, welche ebenfalls einen Träger enthält, entfernt werden kann. Nach Durchleiten einer Probe über ein derartiges Säulenfüllmaterial geliegt es, einen gereinigten Analyten zu erhalten, welcher unmittelbar einem Nachweis bzw. einer Analyse unterworfen werden kann.

Gemäß einer Weiterbildung ist das Füllmaterial für eine Mikro-Adsorptionssäule derart gestaltet, dass das Säulenfüllmaterial wenigstens eine Reinigungs- bzw. Adsorbensschicht, bestehend aus einem Gemisch aus 0,5 bis 90 Gew.-%, insbesondere 5 bis 87 Gew.-% Träger, insbesondere eine Diatomeenerde, 10 bis 80 Gew.-%, insbesondere 25 bis 50 Gew.-% Aluminiumoxid, 2 bis 70 Gew.-%, insbesondere 8 bis 35 Gew.-% Ionentauscher, 10 bis 95 Gew.-%, insbesondere 12 bis 70 Gew.-% Aktivkohle sowie 3 bis 65 Gew.-%, insbesondere 10 bis 40 Gew.-% von wenigstens einem zyklischen, geradkettigen oder verzweigten, mit Phenyl, Cyclohexyl, Butyl, Ethyl, Methyl, Cyanopropyl, Diol, Carboxylat, Benzolsulfoxylat, Aminopropyl, primären, sekundären, tertiären oder quaternären Aminoresten oder Diethylamin substituierten C₈-oder C₁₈-Kohlenwasserstoff, sowie wenigstens eine Trockenmittelschicht, bestehend aus 0,5 bis 90 Gew.-% Träger und Rest Trockenmittel, enthält. Mit einem derartigen Säulenfüllmaterial gelingt nicht nur eine vollständige Reinigung und Trocknung des gelösten Analyten bzw. der biologischen Substanz in einer extrem kurzen Zeit, da sämtliche, in den Schichten des Säulenfüllmaterials enthaltene Substanzen zur Reinigung bzw. Trocknung beitragen und gleichzeitig bzw. nebeneinander wirken, so dass eine besonders rasche und effiziente Reinigung und/oder Trocknung erzielt werden kann. Des weiteren ist ein derartiges Füllmaterial für eine Mikro-Adsorptionssäule nicht nur für eine Aufreinigung und Trocknung des eingesetzten Analyten möglich, sondern es kann beispielsweise auch für eine Derivatisierung der Proben mit wasserempfindlichen Reagenzien vor der Analyse verwendet werden, insbesondere für sämtliche biologischen Proben, wie Nahrungsmittel, Tierfuttermittel, Körner, biologische Proben, wie Blut, Urin, Gewebe, Pflanzenmaterialien, und die schädlichen Substanzen können beispielsweise direkt mit GC/MS oder GC/ECD nachgewiesen bzw. quantifiziert werden.

Auch für chemische Schnelltests kann das Säulenfüllmaterial angewandt werden, da, wie bereits ausgeführt, feste Verunreinigungen auf dem Säulenfüllmaterial zuverlässig abgeschieden bzw. abgetrennt werden.

Gemäß einer weiterbildung der Erfindung wird zusätzlich eine Mikro-Adsorptionssäule zum Trocknen und Reinigen von gelösten organischen bzw. biologischen Analyten zur Verfügung gestellt, wobei die Säule derart ausgestaltet ist, dass die Säule mit wenigstens zwei Schichten gepackt ist, dass die Säule mit Magnesiumsulfat und wenigstens einem weiteren Trockenmittel, gewählt aus der Gruppe, enthaltend Aluminiumoxid, Calciumchlorid, Calciumhydrid, Calciumoxid, Calciumsulfat, Kaliumhydrid, Kieselgel, Kupfersulfat, Magnesiumoxid, Magnesiumperchlorat, Molekularsiebe, Natriumhydroxid, Phosphorpentoxid, Schwefelsäure auf Silikat, Phosphorpentoxid auf Silikat, sowie 0,5 bis 90 Gew.-% eines natürlich vorkommenden oder synthetischen Trägers mit großer, innerer Oberfläche, gewählt aus Zeolithen, Diatomeenerden, Bentonit oder Siliziumdioxid, gepackt ist und dass wenigstens eine der Schichten eine trockenmittelhaltige Schicht ist und wenigstens eine der Schichten eine reinigungsmittel- bzw. adsorbenshaltige Schicht ist, wobei das Reinigungsmittel bzw. Adsorbens aus der Gruppe, bestehend aus zyklischen, geradkettigen oder verzweigten, mit Phenyl, Cyclohexyl, Butyl, Ethyl, Methyl, Cyanopropyl, Diol, Carboxylat, Benzolsulfoxylat, Aminopropyl, primären, sekundären, tertiären oder quaternären Aminoresten oder Diethylamin substituierten C₈- oder C₁₈-Kohlenwasserstoffen; neutralem, saurem oder basischem Aluminiumoxid, einem Ionentauscher, Kieselgel, Aktivkohle oder Magnesiumsilikat, gewählt ist. Mit einer derartig gepackten Säule gelingt es, eine Adsorption von Schwebstoffen zu erzielen bzw. auch adsorbierbare, gelöste Verunreinigungen an dem Träger abzutrennen und gleichzeitig das in dem Lösungsmittel enthaltene Wasser vollständig zu entfernen, wodurch der Analyten gleich und unmittelbar einer Analyse, in welcher insbesondere Wasser stören würde, zugeführt werden kann. Indem die Adsorptionssäule mit wenigstens einer trockenmittelhaltigen Schicht und einer adsorbenshaltigen Schicht gepackt ist, gelingt, wie dies bereits ausgeführt wurde, eine besonders effiziente und rasche Auftrennung, Trocknung und Reinigung der zu analysierenden Probe, wodurch eine derartige Adsorptionssäule für eine One-Step-Reinigung und insbesondere für eine Derivatisierung und/oder Schnellanalyse von zu untersuchenden Analyten, bzw. biologischen Substanzen geeignet ist.

Indem, die Säule mit wenigstens zwei Schichten gepackt ist, kann die Adsorptionssäule entweder verschiedene Trockenstufen aufweisen, enthaltend beispielsweise mehr oder weniger Träger mit großer, innerer Oberfläche bzw. mehr oder weniger Trockenmittel bzw. Schichten, enthaltend unterschiedliche Trockenmittel bzw. unterschiedliche Trägers, aber auch als Adsorptionssäule, welche neben einem Trockenmittel auch ein zusätzliches Reinigungs- bzw. Adsorptionsmittel enthält, eingesetzt werden.

Gemäß einer Weiterbildung ist die Mikro-Adsorptionssäule mit 5 bis 70 Gew.-% Träger gepackt, wodurch auf die speziellen Gegebenheiten einer Probe, insbesondere den Wassergehalt der Probe bzw. den Verunreinigungsgehalt der Probe, gezielt Rücksicht genommen werden kann.

Um sicherzustellen, dass die Säule nicht durch die durch die Säule gedrückte Probe, insbesondere die flüssige Probe, enthaltend den Analyten bzw. die biologische Substanz, inhomogen wird bzw. einzelne Schichten voneinander getrennt werden bzw. Löcher in der gepackten Säule entstehen, ist die Erfindung dahingehend weitergebildet, dass die Säule am Zulauf, Auslauf und gegebenenfalls zwischen den Schichten mit jeweils einer Filterschicht, gewählt aus einer Fritte, Filterpapier, einer Membran oder einem Diaphragma, versehen ist. Durch eine derartige Mikro-Adsorptionasäule kann weiters die Abtrennung von groben, festen Verunreinigungen bzw. nicht gelösten Substanzpartikeln vor Einlauf der zu untersuchenden Analytenprobe in die Mikro-Adsorptionssäule erzielt werden und gleichzeitig auch der Austrag von mitgerissenen Reinigungs- bzw. Trockenmittelpartikeln in die zu untersuchende Probe verhindert werden, wodurch eine besonders sauber und effizient arbeitende Mikro-Adsorptionssäule zur Verfügung gestellt werden kann.

Indem, wie dies einer Weiterbildung der Erfindung entspricht, die Mikro-Adsorptionssäule vom Zulauf zum Auslauf mit einer ersten Reinigungs- bzw. Adsorbensschicht, enthaltend 0,5 bis 90 Gew.-% Träger, Kieselgel sowie gegebenenfalls Aluminiumoxid und/oder einen Ionentauscher, einer ersten Trockenmittelschicht, bestehend aus 0,5 bis 90 Gew.-% Träger, Magnesiumsulfat sowie ein oder mehrere weitere Trockenmittel, gewählt aus der Gruppe Aluminiumoxid, Calciumoxid, Calciumsulfat, Kaliumhydrid, Kieselgel, Kupfersulfat, Magnesiumoxid, Molekularsieb, Natriumhydroxid, Phosphorpentoxid, Schwefelsäure auf Silikat, Phosphorpentoxid auf Silikat, einer zweiten Reinigungs- bzw. Adsorbensschicht, enthaltend 0,5 bis 90 Gew.-% Träger, sowie wenigstens einen zyklischen, geradkettigen oder verzweigten substituierten C₈ oder C₁₈ Kohlenwasserstoff, sowie gegebenenfalls Aktivkohle, und einer zweiten Trockenmittelschicht, enthaltend 0,5 bis 90 Gew.-% Träger und ein Trockenmittel, gewählt aus Calciumchlorid, Kaliumcarbonat, Magnesiumsulfat sowie gegebenenfalls ein oder mehrere weitere Trockenmittel, gewählt aus der Gruppe, enthaltend Calciumhydrid, Calciumoxid, Calciumsulfat, Kaliumhydrid, Kieselgel, Magnesiumoxid, Magnesiumperchlorat, Natriumhydroxid, Phosphorpentoxid, Schwefelsäure auf Silikat, Phosphorpentoxid auf Silikat, gepackt ist, kann auf spezielle, besondere Eigenheiten von zu untersuchenden Analten bzw. die besonderen Reaktionsfähigkeiten der einzelnen, in einer derartigen Säule enthaltenen Substanzen Rücksicht genommen werden, wodurch eine noch effizientere und raschere Reinigung und Trocknung der Probe ohne zusätzlichen Zeitaufwand erzielt werden kann.

Indem, wie dies mit einer derartigen Adsorptionssäule ausgeführt wird, die Probe erst über ein Reinigungsmittel geleitet wird, welches für seine Reinigung einen Wassergehalt benötigt, anschließend eine erste Trocknung vorgenommen wird, dann eine weitere Reinigung mit einem Reinigungsmittel, welches für seine wirkungsweise nicht unbedingt eine wasserhaltige Lösung des Analyten benötigt, und dann mit einem extrem effizienten Trockenmittel zur Abtrennung von Restfeuchtigkeit umgesetzt wird, können in einer sogenannten One-Step-Umsetzung sämtliche störenden Verunreinigungen sowie eine Analyse störende Substanzen sowie das Wasser in einem Schritt entfernt werden, wobei auch, wie dies bereits ausgeführt wurde, Aufschlämmungen und dgl. eingesetzt werden können, ohne dass das Säulenmaterial verpackt bzw. verlegt wird und unmittelbar anschließend Derivatisierungen mit extrem wasserempfindlichen Reagenzien ohne weitere vorherige Reinigung und/oder Trocknung durchgeführt werden.

Die vorliegende Erfindung zielt schließlich auch auf die Verwendung eines Säulenfüllmaterials bzw. einer Mikro-Adsorptionssäule zum Trocknen und Reinigen von gelösten, organischen bzw. biologischen Analyten, wie Toxinen, Antibiotika, vitaminen, Hormonen oder Pestiziden, ab, wobei für eine derartige Verwendung das Säulenfüllmaterial bzw. die Säule zum Trocknen und Reinigen einer wässrigen, organischen Lösung mit einem Wassergehalt von bis zu 30 Gew.--% der organischen bzw. biologischen Analyten, eingesetzt wird. Mit einem derartigen Füllmaterial für eine Mikro-Adsorptionssäule, insbesondere mit einer derartigen Verwendung, gelingt es, extrem hohe Wassergehalte aus organischen Lösungsmitteln sicher und zuverlässig abzutrennen, so dass nachfolgende Analyseschritte, wie GC, MS, GC/MS, GC/ECD und dgl., sicher und zuverlässig ohne störende Substanzen, wie Wasser und dgl., unmittelbar nach der Reinigung und/oder Trocknung der zu untersuchenden Analytenlösung durchgeführt werden können.

Eine besonders effiziente Verwendung eines Säulenfüllmaterial ist dadurch gekennzeichnet, dass ein Verhältnis von Säulenfüllmaterial zu zu behandelnder Analytenlösung wenigstens 2 : 1 bis 1 : 5, insbesondere 1,5 : 1 bis 1 : 2,5, beträgt. Indem ein Verhältnis von Säulenfüllmaterial zu zu behandelnder Analytenlösung wenigstens 2 : 1 bis 1 : 5, insbesondere 1,5 : 1 bis 1 ; 2,5, beträgt, wird immer eine verhältnismäßig große Menge an Füllmaterial für eine Mikro-Adsorptionssäule in bezug auf die zu behandelnde Analytenlösung zur Verfügung gestellt, wodurch ausreichend reaktionsfähige Oberflächen bzw. auch Trockenmittel bzw. Reinigungsmittel zur Verfügung gestellt wird, so daß eine extrem rasche Aufreinigung der zu behandelnden Analytenlösung und auch eine extrem rasche Trocknung derselben möglich ist.

Die Erfindung wird nachfolgend anhand eines Beispiels weiter erläutert.

In diesem Beispiel wurde eine Mehrzahl von unterschiedlichen Mischungen aus Trockenmittel und Träger mit großer, innerer Oberfläche sowie auch eine Mehrzahl von Mischungen, bestehend aus Reinigungs- bzw. Adsorptionsmittel und einem Träger, sowie damit befüllte Säulchen hergestellt, welche nachfolgend zum Aufreinigen von verschiedensten, organischen bzw. biologischen Mitteln bzw. Mykotoxine eingesetzt wurden. Als Vergleich wurden dieselben Mykotoxine bzw. biologischen Proben einer herkömmlichen Aufreinigung unterzogen und eine nachfolgende Derivatisierung bzw. Analytik wurde sowohl an Proben als auch Vergleichsproben vorgenommen, um die Ergebnisse des Säulenfüllmaterials bzw. der Adsorptionssäulchen, welche mit dem Säulenfüllmaterial gemäß der vorliegenden Erfindung befüllt sind, mit dem Stand der Technik zu vergleichen.

Trockenmittelmischung 1 (Vergleich): 300 mg Diatomeenerde mit großer, innerer Oberfläche, welche von Cornay unter dem Handelsname Celite verkauft wird, 500 mg Zeolith, 300 mg Calciumchlorid

Trockenmittelmischung 2 (gemäß der Erfindung) : 300 mg Celite ^{®}, 500 mg Magnesiumsulfat, 500 mg Calciumcarbonat, 300 mg Calciumchlorid

Trockenmittelmischung 3 (Vergleich): 1000 mg Celite ^{®}, 500 mg Kieselgel, 500 mg Molekularsieb, 100 mg Kaliumhydrid, 100 mg Kaliumcarbonat

Trockenmittelmischung 4 (Vergleich): 500 mg Celite ^{®}, 100 mg Schwefelsäure auf Silikat, 300 mg Aluminiumoxid, 300 mg Kieselgel, 500 mg Molekularsieb, 100 mg Calciumsulfat

Reinigungsmittelmischung 1: 500 mg Diatomeenerde mit großer, innerer Oberfläche, welche von Cornay unter dem Handelsnamen Celite ^{®} verkauft wird, 50 mg Aluminiumoxid, 300 mg Cyclohexyloctadecan

Reinigungsmittelmischung 2: 300 mg 1,3,5-Triethyloctaclecan, 80 mg eines basischen Ionentauscher, 100 mg Aktivkohle, 500 mg Diatomeenerde, 500 mg einer Mischung von verschiedenen, natürlich vorkommenden Zeolithen

Reinigungsmittelmischung 3: 300 mg 1,3,5-Triethyloctadecan, 80 mg eines basischen Ionentauscher, 500 mg Diatomeenerde, 500 mg einer Mischung von verschiedenen, natürlich vorkommenden Zeolithen

Es wurden jeweils Säulen befüllt, die 1,5 g von einer der vier Trockenmittelmischungen enthalten. Weiters wurden fünf Säulchen mit jeweils 1,5 g Reinigungsmittelmischung 2 und 1,5 g von Trockenmittelmischung 2 befüllt sowie 1,5 g Reinigungsmittelmischung 3 und 1,5 g von Trockenmittelmischung 2. Schließlich wurde ein Röhrchen mit 1 g Reinigungsmittelmischung 1, 1 g Trockenmittelmischung 2, 1 g Reinigungsmittelmischung 2 und 1 g Trockenmittelmischung 3 befüllt.

Mittels dieser Röhrchen wurden jeweils 5 ml einer einen B-Trichothecen enthaltenden, organischen Lösung gereinigt bzw. getrocknet und diese Lösung wurde nachfolgend mittels GC-ECD (Gaschromatografie) mit einem Electron-Cepture-Detektor untersucht. Das eingesetzte Eluat wurde durch Extraktion von 25 g eines gemahlenen Getreides mit 100 ml Acetonitril/wasser und nachfolgende Filtration durch einen Faltenfilter gewonnen. 5 ml dieses Eluats werden in ein Reinigungs- bzw. Adsorptionsröhrchen gemäß der US-A 4,895,808 gefüllt und ein zweites Innenröhrchen, gefüllt mit den wie oben angegebenen Reinigungs- bzw. Trockenmitteln, wurde in jede Probe unter Druck eingeschoben, so daß in dem inneren Röhrchen, enthaltend das Reinigungs- bzw. Trockenmittel, 3 ml gereinigtes Eluat gewonnen wurden.

Aus diesem Eluat werden Stammlösungen der entsprechenden Referenzsubstanzen mit einer Konzentration von etwa 2,5 µg/ml mit der kommerziell erhältlichen Referenzsubstanz (in reinem Acetonitril) in 20 ml Meßkolben hergestellt. Die stammläeungen der Referenzsubstanzen wurden auf eine Konzentration von 0,5 µg/ml verdünnt und dazu wurde jeweils 1 ml der entsprechenden Standardlösung in ein 10 ml Schraubkappenventil pipettiert und mit 4 ml Acetonitril aufgefüllt. Die Phiolen wurden verschlossen und vor Gebrauch gut durchmischt. In Folge wurden zwei Standardverdünnungsreihen der zu untersuchenden Standard- bzw. Probenlösungen hergestellt und die Proben wurden mit Tri-Sil TBT Derivatisierungsreagenz (Tri-Sil TBT ist eine Mischung aus N-Trimethylsilylimidazol-N,O-Bis(trimethylsilyl)acetamid und Trimethylsilylchlorid) sowie TMS versetzt und verschlossen. Die Reaktionelösungen wurden vermischt. Die Phiolen wurden für 15 min bei 40 °C im Trockenschrank inkubiert und mit Isooktan und einer Pufferlösung aufgenommen. Nach Aufnahme der organischen Phase mit Isooktan werden die Proben in einem HP 5890 Serie 2 Gaschromatograf, der mit einem Autoinjektor und angeschlossenen Electron Capture Detektor (ECD) ausgerüstet wurde, untersucht. Sowohl die Probe als auch die Vergleichsprobe zeigten in der GC-Analyse eine Substanz mit der charakteristischen Retentionszeit des verwendeten DON-Derivats und es wurden keine Störungen der vorhandenen Probe mit Verunreinigungen oder Wasser detektiert. Die Retentionszeiten der Hauptbestandteile waren wie folgt: DON: 24,72 min; 3-AcDON: 31,21 min; 15-AcDON: 33,84 min; Fuseranon X: 34,87 min und Nivalenol: 37,43 min.

Die Verwendung der einzelnen gemischten Röhrchen für die Analytik von B-Trichothecen zeigten folgendes Ergebnis:

Vergleichsversuch nur Trockenmittelmischung 1: Es wurde kein störender Wasserpeak gefunden, jedoch Verunreinigungen in der GC-Analyse

Vergleichsversuch nur Trockenmittelmischung 2: Es wurde kein störender Wasserpeak gefunden, jedoch Verunreinigungen in der GC-Analyse

Vergleichsversuch nur Trockenmittelmischung 3: Es wurde kein störender Wasserpeak gefunden, jedoch Verunreinigungen in der GC-Analyse

Vergleichsversuch mit Röhrchen, enthaltend zwei Trockenmittel: Es wurde kein störender Wasserpeak gefunden, jedoch geringe Verunreinigungen in der GC-Δnalyse, wobei die nachgewiesene Menge der Verunreinigungen gegenüber dem Einsatz von nur einem Trockenmittel deutlich abgesunken ist, was auf das erhöhte Vorhandensein der Diatomeenerde zurückgeführt wird

Röhrchen, enthaltend Reinigungsmittelmischung 2 und Trockenmittelmischung 2: Es wurde kein störendes Wasser und kaum störende verunreinigungen gefunden

Röhrchen, enthaltend Reinigungsmittelmischung 3 und Trockenmittelmischung 2: Es wurde kein störendes Wasser und auch keine störenden Verunreinigungen gefunden

Röhrchen, enthaltend Reinigungsmittelmischung 1, Trockenmittelmischung 2, Reinigungsmittelmischung 2 und Trockenmittelmischung 3: Es wurde kein störendes Wasser und auch keine störenden Verunreinigungen gefunden, sondern es war lediglich der Substanzpeak, im GC deutlich erkenntlich

Zusammenfassend läßt sich festhalten, daß insbesondere Säulenfüllmaterialien, bestehend aus mehreren Schichten, wobei wenigstens eine ein Reinigungsmittel bzw. Adsorptionsmittel enthaltende Schicht und eine ein Trockenmittel enthaltende Schicht eingesetzt werden, überragende Ergebnisse bei der nachfolgenden GC-Analyse eines derivatisierten Produkts zeigen.

Zum Vergleich wurde eine analoge Proben, enthaltend B-Trichothecen, gereinigt und nachfolgend wie oben beschrieben derivatisiert . Die Aufreinigung der das Mykotoxin enthaltenden Probe wird wie folgt durchgeführt. Eine wäßrige Lösung des Mykotoxine wird mit Schwefelsäure angesäuert, 5 ml davon mit Acetonitril und Hexan extrahiert und anschließend zentrifugiert. Die Hexanphase wird abgetrennt. Die Acetonitrilphase wird im Stickstoffstrom konzentriert, das Konzentrat wird in Wasser aufgenommen und der pH auf 8,5 eingestellt und auf eine Oasissäule, die vorher mit 2 ml Methanol und 2 ml Wasser äquilibriert wurde, aufgegeben. Die Säule wird gewaschen, die Mykotoxine mit Methanol extrahiert, der Extrakt eingetrocknet und der Rest gelöst und verdünnt und dann weiter wie oben beschrieben derivatisiert. Mit einer derartigen Aufarbeitung gemäß dem Stand der Technik wird im Vergleich zu dem oben beschriebenen Füllmaterial für eine Mikro-Adsorptionssäule gemäß der vorliegenden Erfindung die 10- bis 20-fache Zeit für die Aufarbeitung der Mykotoxine benötigt und darüber hinaus kein so reines Produkt wie mit dem Vorliegenden Säulenfüllmaterialien erhalten.

In der Folge wurden die erfindungsgemäßen Säulenfüllmaterialien, insbesondere die Säulenfüllmaterialien enthaltend eine Schicht eines Reinigungs- bzw. Adsorptionsmittels und eine Schicht eines Trockenmittels, sowie eine mehrere Schichten aufweisende Säulen eingesetzt für:

### a) die Analytik von Nitrofuranantibiotika in Fisch- und Fleischprodukten

Die Aufreinigung von 5 ml der extrahierten Probe wurde mit einem Röhrchen, enthaltend 1,5 g Reinigungsmittelmischung und 1,5 g Trockenmittelmischung durchgeführt.

3 ml gereinigte Probe wurden entsprechend der Analytik von B-Trichothecen aufgearbeitet und in der Folge mit 2-Nitrobenzaldehyd für die HPLC-Analytik derivatisiert und auf einer HPLC-Säule untersucht. Die Ergebnisse zeigen wiederum unmittelbar einen Substanzpeak und einen Peak des Vergleichsmaterials, jedoch keine störenden Wassermengen bzw. Verunreinigungen.

### b) die Analytik von Fluoroquinolonantibiotika in Fleischrückständen

Die Aufreinigung wurde mit einem Röhrchen, enthaltend 1,5 g Reinigungsmittelmischung und 1,5 g Trockenmittelmischung, an 5 ml einer den Analyten enthaltenden extrahierten Probe durchgeführt.

2 ml gereinigte Probe wurden in der Folge direkt mittels HPLC auf einer HPLC Agilent 1100 analysiert, wobei Zorbax Eclipse XDB-C8 Säule verwendet wurde und wurde nachfolgend mittels Fluoreszenzdetektor quantifiziert. Die Ergebnisse zeigen wiederum unmittelbar einen Substanzpeak und einen Peak des Vergleichsmaterials, jedoch keine störenden Wassermengen bzw. Verunreinigungen.

### c) die Analytik von Nitrofuranmetaboliten in Fisch- und Fleischprodukten

Die Aufreinigung wurde mit einem Röhrchen, enthaltend 1,5 g Reinigungsmittelmischung und 1,5 g Trockenmittelmischung, an 5 ml Analyten enthaltender Lösung durchgeführt.

2 ml gereinigte Probe wurden mit 2-Nitrobenzaldehyd für die HPLC-Analytik derivatisiert und auf einer HPLC Agilent 1100 analysiert,. Die Trennsäule war eine Zorbax Eclipse XDB C18, 3,5 µm Säule und der Detektor ein MSD Ion Trap Detektor (im positiven Ionenmodus). Die Ergebnisse zeigen wiederum unmittelbar einen Substanzpeak und einen Peak des Vergleichsmaterial, jedoch keine störenden Wassermengen bzw. Verunreinigungen.

### d) die Analytik von Paraben-Derivaten

Die Aufreinigung wurde mit einem Röhrchen, enthaltend 1,5 g Reinigungsmittelmischung und 1,5 g Trockenmittelmischung, an 5 ml Analyten enthaltender Lösung durchgeführt.

2 ml gereinigte Probe wurden anschließend direkt auf einer HPLC Agilent 1100 mit UV-Detektion untersucht. Die Ergebnisse zeigen wiederum unmittelbar einen Substanzpeak und einen Peak des Vergleichsmaterials, jedoch keine störenden wassermengen bzw. Verunreinigungen.

### e) die Analytik von Sulfonamiden in Fleisch

Die Aufreinigung wurde mit einem Röhrchen, enthaltend 1,5 g Reinigungsmittelmischung und 1,5 g Trockenmittelmischung, an 5 ml Analyten enthaltender Lösung durchgeführt.

2 ml gereinigte Probe wurden direkt auf einer HPLC Agilent 1100 analysiert, d.h. mittels einer Zorbax Eclipse XDB C8, 5 µm Säule aufgetrennt und mit APCI (atmospheric pressure chemical ionization) MS detektiert. Die Ergebnisse zeigen wiederum unmittelbar einen Substanzpeak und einen Peak des Vergleichsmaterials, jedoch keine störenden Wassermengen bzw. Verunreinigungen.

### f) die Analytik von Salbutamol in Harn

Die Aufreinigung wurde mit einem Röhrchen, enthaltend 1,5 g Reinigungsmittelmischung und 1,5 g Trockenmittelmischung, an 5 ml Analyten enthaltender Lösung durchgeführt.

1 ml gereinigte Probe wurden N-Methyl-N-trimethylsilyltrifluoracetamid derivatisiert und mittels GC/MS analysiert. Dabei wurde eine Kapillarsäule (30m Länge, 0,25 mm Innendurchmesser, 0,25 µm Schichtdicke) zur Auftrennung verwendet. Die Ergebnisse zeigen wiederum unmittelbar einen Substanzpeak und einen Peak des Vergleichsmaterials, jedoch keine störenden Wassermengen bzw. Verunreinigungen.

### g) die Analytik von Dopingmitteln in Harn

Die Urinprobe wurde neutralisiert und mit β-Glucoronidase (2 h, 50 °C) behandelt und in der Folge 1:4 mit Acetonitril verdünnt. Die Aufreinigung wurde mit einem Röhrchen, enthaltend 1,5 g Reinigungsmittelmisehung und 1,5 g Trockenmittelmischung, an 5 ml Analyten enthaltender Lösung durchgeführt. Die analytische Bestimmung wurde mittels 1100 HPLC MS (Elektrospray Modus) durchgeführt, wobei als Trennsäule eine Agilent Zorbax Eclipse XDB C18, 3,5 µm verwendet wurde. Die Ergebnisse zeigen wiederum unmittelbar einen Substanzpeak und einen Peak des Vergleichsmaterials, jedoch keine störenden Wassermengen bzw. Verunreinigungen.

### h) Analytik von Pestiziden aus Obst, Gemüse oder Fruchtsaft

Ein wäßriger Extrakt bzw. ein Extraktgemisch der Probe mit Acetonitril/Wasser wird mit einem Röhrchen enthaltend 1,5 g Reinigungsmittelmischung und 1,5 g Trockenmittelmischung aufgereinigt.

Die gereinigte Probe wird direkt in eine LVI-GC MS (Large Volume Injection Gas Chromatograph mit Massendetektor): Agilent 6890 GC mit Quadrupol Massendetektor, Autoinjektor und chromatographischer Auftrennung mittels DB-5MS Säule eingespritzt. Die Ergebnisse zeigen der Analyse zeigen unmittelbar einen Substanzpeak und einen Peak des Vergleichsmaterials, jedoch keine störenden Wassermengen bzw. Verunreinigungen.

Mit diesem Verfahren sind folgende Pestizide nachweisbar: 2-Phenylphenol, Amitraz, Bifenthrin, Bromopropylat, Bromopropylat, Buprofezin, Carbaryl, Chlorpropham, Chlorpyrifos, Chlorpyrifos, Chlozolinate, Cyfluthrin sum, DDD, DDE, DDT, Deltamethrin, Diazinon, Dichlobenil, Dichlofluanid, Dicofol, Dieldrin, Diphenylamine, Endosulfan, Endosulfansulfat, Ethion, Ethofumesat, Etrimfos, Flucythrinat, Furalaxyl, HCB, HCH-beta, HCH-gamma, Heptachlorepoxid (trans), Methylkresoxim, Malaoxon, Malathion, Mecarbam, Metalaxyl, Methidathion, Metoxuron, Myclobutanil, Oxadixyl, oxychlordane, Paclobutrazol, Parathionethyl, Parathionmethyl, Penconazole, Pendimethalin, Pentachlorothioanisol, Permethrin, Phosmet, Pirimiphosmethyl, Prochloraz, Procymidone, Profenofos, Prometryn, Propargit, Propham, Propyzamid, Quinalphos, Quintozen, simazin, Tecnazene, Terbuthylazin, Tetradifon, vinclozolin.

Mit den Säulenfüllmaterialien gemäß der vorliegenden Erfindung gelingt es auch, Fluoreszenz-derivatisiertes FQ-Deoxynivalenol in Weizen nachzuweisen. Hiefür wird gemahlener Weizen mit 100 ml wäßrigem Acetonitril vermischt und der Extrakt filtriert. Zum Reinigen werden 5 ml des filtrierten Extrakts in ein Analyseröhren gemäß der US-A 4,895,808 eingefüllt und die Reinigung bzw. Trocknung der Probe erfolgt mit einem Füllmaterial für eine Mikro-Adsorptionssäule, enthaltend 1,5 g Reinigungsmittelmiachung 2 und 1,5 g Trockenmittelmischung 1 sowie eine Glasfritte über und unter den zwei Schichten, bestehend aus Reinigungsmittel und Trockenmittel. Die Probe wird durch das mit dem Säulenfüllmaterial gefüllte Säulchen durchgedrückt und 1 ml gereinigter, getrockneter Extrakt wird in eine Meßphiole gefüllt und es werden 1,2-Diaminomethan in Methanol und ZrO-Nitrat in Methanol zur Derivatisierung hinzugefügt. Die verschlossene Phiole wird bei 70 °C für 8 min erhitzt. Nach einem Abschrecken wird die Fluoreszenz der Probe auf einem Perkin-Elmer-Fluorometer gemessen. Auch bei dieser Probe zeigt es sich, daß es keine störenden Verunreinigungen in der mit dem Röhrchen gemäß der vorliegenden Erfindung aufgereinigten Proben mehr gibt und daß die Derivatisierung unmittelbar nach der Reinigung ohne weitere, vorhergehende Aufreinigung bzw. Vorbereitung durchgeführt werden konnte.

Zusammenfassend ist allen Verfahren, in welchen die erfindungsgemäßen Säulenfüllmaterialien eingesetzt sind, gemeinsam, daß sie einen extremen Zeitgewinn gegenüber den Verfahren gemäß dem Stand der Technik zeigen, insbesondere ist für das Reinigen und Trocknen der jeweiligen Proben ein Zeitaufwand von maximal 1,5 bis 2 min erforderlich, was um ein Vielfaches kürzer als die herkömmlichen Verfahren gemäß dem Stand der Technik ist und gleichzeitig extrem reine und trockene Produkte liefern.

## Patentansprüche

1. Füllmaterial für eine Mikro-Adsorptionssäule zum Trocknen und, Reinigen von gelösten, organischen bzw.. biologischen Analyten, wie Toxinen, Antibiotika, Vitaminen, Hormonen, Pestiziden und dgl., enthaltend wenigstens ein Trockenmittel, **dadurch gekennzeichnet, dass** das Säulenfüllmaterial Magnesiumsulfat und wenigstens ein weiteres Trockenmittel, gewählt aus der Gruppe, enthaltend Aluminiumoxid, Calciumchlorid, Calciumhydrid, Calciumoxid, Calciumsulfat, Kaliumhydrid, Kieselgel, Kupfersulfat, Magnesiumoxid, Magnesiumperchlorat, Molekularsiebe, Natriumhydroxid, Phosphorpentoxid, Schwefelsäure auf Silikat, Phosphorpentoxid auf Silikat, sowie 0,5 bis 90 Gew.-% eines natürlich vorkommenden oder synthetischen Trägers mit großer, innerer Oberfläche, gewählt aus Zeolithen, Diatomeenerden, Bentonit oder Siliziumdioxid, enthält, und daß das Füllmaterial für eine Mikro-Adsorptionssäule zusätzlich wenigstens ein Adsorbens bzw. Reinigungsmittel, gewählt aus der Gruppe, enthaltend zyklische, geradkettige oder verzweigte, mit Phenyl, Cyclohexyl, Butyl, Ethyl, Methyl, Cyanopropyl, Diol, Carboxylat, Benzolsulfoxylat, Aminopropyl, primären, sekundären, tertiären oder quaternären Aminoresten oder Diethylamin substituierte C₈- oder C₁₀-Kohlenwasserstoffe; neutrales, saures oder basisches Aluminiumoxid, Ionentauscher, Kieselgel, Aktivkohle oder Magnesiumsilikat, sowie gegebenenfalls ein oder mehrere weitere Trockenmittel, gewählt aus der Gruppe, enthaltend Calciumhydrid, Calciumoxid, Calciumsulfat, Kaliumhydrid, Kieselgel, Magnesiumoxid, Magnesiumperchlorat, Natriumhydroxid, Phospharpentoxid, Schwefelsäure auf Silikat, Phospharpentoxid auf Silikat, enthält.

2. Füllmaterial für eine Mikro-Adsorptionssäule nach Anspruch 1, **dadurch gekennzeichnet, daß** dass Füllmaterial für eine Mikro-Adsorptionssäule 5 - 70 Gew.-% Träger enthält.

3. Füllmaterial für eine Mikro-Adsorptionssäule nach Anspruch 1 oder 2, **dadurch gekennzeichnet, dass** das Füllmaterial für eine Mikro-Adsorptionssäule aus 0,5 bis 90 Gew.-% Träger, 20 bis 60 Gew.-% Magnesiumsulfat, 20 bis 60 Gew.-% Kaliumcarbonat und 10 bis 35 Gew.-% Calciumchlorid besteht.

4. Füllmaterial für eine Mikro-Adsorptionssäule nach Anspruch 1, 2 oder 3, **dadurch gekennzeichnet, dass** das Füllmaterial für eine Mikro-Adsorptionssäule in Form von Schichten eingesetzt ist.

5. Füllmaterial für eine Mikro-Adsorptionssäule nach einem der Ansprüche 1 bis 4, **dadurch gekennzeichnet, dass** das Füllmaterial für eine Mikro-Adsorptionssäule wenigstens eine Reinigungs- bzw. Adsorbensschicht, bestehend aus einem Gemisch aus 0,5 bis 90 Gew.-% Träger, gegebenenfalls Kieselgel und wenigstens einem zyklischen, geradkettigen oder verzweigten, mit Phenyl, Cyclohexyl, Butyl, Ethyl, Methyl, Cyanopropyl, Diol, Carboxylat, Benzolsulfoxylat, Aminopropyl, primären, sekundären, tertiären oder quaternären Aminoresten oder Diethylamin substituiertem C₈- oder C₁₈-Kohlenwasserstoff, sowie wenigstens eine Trockenmittelschicht, bestehend aus 0,5 bis 90 Gew.-% Träger und Rest Trockenmittel, enthält.

6. Füllmaterial für eine Mikro-Adsorptionssäule nach einem der Ansprüche 1 bis 5, **dadurch gekennzeichnet, dass** das Füllmaterial für eine Mikro-Adsorptionssäule wenigstens eine Reinigungs- bzw. Adsorbensschicht, bestehend aus einem Gemisch aus 0,5 bis 90 Gew.-%, insbesondere 5 bis 87 Gew.-% Träger, insbesondere eine Diatomeenerde, 10 bis 80 Gew.-%, insbesondere 25 bis 50 Gew.-% Aluminiumoxid, 2 bis 70 Gew.-%, insbesondere 8 bis 35 Gew.-% Ionentauscher, 10 bis 95. Gew.-%, insbesondere 12 bis 70 Gew.-% Aktivkohle sowie 3 bis 65 Gew.-%, insbesondere 10 bis 40 Gew.-% von wenigstens einem zyklischen, geradkettigen oder verzweigten, mit Phenyl, Cyclohexyl, Butyl, Ethyl, Methyl, Cyanopropyl, Diol, Carboxylat, Benzolsulfoxylat, Aminopropyl, primären, sekundären, tertiären oder quaternären Aminoresten oder Diethylamin substituierten C₈- oder C₁₈-Kohlenwasserstoff, sowie wenigstens eine Trockenmittelschicht, bestehend aus 0,5 bis 90 Gew.-% Träger und Rest Trockenmittel, enthält.

7. Mikro-Adsorptionssäule zum Trocknen und Reinigen von gelösten organischen bzw. biologischen Analyten, wie Toxinen, Antibiotika, Vitaminen, Hormonen, Pestiziden und dgl., enthaltend wenigstens ein Trockenmittel, **dadurch gekennzeichnet, dass** die Säule mit wenigstens zwei Schichten gepackt list, dass die Säule Magnesiumsulfat und wenigstens einem weiteren Trockenmittel, gewählt aus der Gruppe, enthaltend Aluminiumoxid, Calciumchlorid, Calciumhydrid, Calciumoxid, Calciumsulfat, Kaliumhydrid, Kieselgel, Kupfersulfat, Magnesiumoxid, Magnesiumperchlorat, Molekularsiebe, Natriumhydroxid, Phosphorpentoxid, Schwefelsäure auf Silikat, Phosphorpentoxid auf Silikat, sowie 0,5 bis 90 Gew.-% eines natürlich vorkommenden oder synthetischen Trägers mit großer, innerer Oberfläche, gewählt aus Zeolithen, Diatomeenerden, Bentonit oder Siliziumdioxid enthält, und dass wenigstens eine der Schichten eine trockenmittelhaltige Schicht ist und wenigstens eine der Schichten eine reinigungsmittel- bzw. adsorbenshaltige Schicht ist, wobei das Reinigungsmittel bzw. Adsorbens aus der Gruppe, bestehend aus zyklischen, geradkettigen oder verzweigten, mit Phenyl, Cyclohexyl, Butyl, Ethyl, Methyl, Cyanopropyl, Diol, Carboxylit, Benzolsulfoxylat, Aminopropyl, primären, sekundären, tertiären oder quaternären Aminoresten oder Diethylamin substituierten C₈- oder C₁₈-Kohlenwasserstoffen; neutralem, saurem oder basischem Aluminiumoxid, einem Ionentauscher, Kieselgel, Aktivkohle oder Magnesiumsilikat, gewählt ist.

8. Mikro-Adsorptionssäule nach Anspruch 7, **dadurch gekennzeichnet, dass** die Säule mit 5 bis 70 Gew.-% Träger gepackt ist.

9. Mikro-Adsorptionssäule nach Anspruch 7 oder 8, **dadurch gekennzeichnet, dass** die Säule am Zulauf, Auslauf und gegebenenfalls zwischen den Schichten mit jeweils einer Filterschicht, wählt aus einer Fritte, Filterpapier, einem Membran oder einem Diaphragma, versehen ist.

10. Mikro-Adsorptionssäule nach Anspruch 7, 8 oder 9, **dadurch gekennzeichnet, daß** die Säule am Zulauf zum Auslauf mit einer Reinigungs- und Adsorbensschicht, enthaltend 0,5 bis 90 Gew.-% Träger, Kieselgel sowie gegebenenfalls Aluminiumoxid und/oder einen Ionentauscher, einer ersten Trockenmittelschicht, bestehend aus 0,5 bis 90 Gew.-% Träger, Magnesiumsulfat sowie ein oder mehrere weitere Trockenmittel, gewählt aus der Gruppe Aluminiumoxid, Calciumoxid, Calciumsulfat, Kaliumhydrid, Kieselgel, Kupfersulfat, Magnesiumoxid, Molekularsieb, Natriumhydroxid, Phosphorpentoxid, Schwefelsäure auf Silikat, Phophorpentoxid auf Silikat, einer zweiten Reinigung- bzw. Adsorbensschicht, enthaltend 0,5 bis 90 Gew.-% Träger, sowie wenigstens einen zklischen, geradkettigen oder verzweigten substituierten C₈ oder C₁₈ Kohlenwasserstoff, sowie gegebenenfalls Aktivkohle, und einer zweiten Trockenmittelschscht, enthaltend 0,5 bis 90 Gew.-% Träger und ein Trockenmittel, gewählt aus Calciumchlorid, Kaliumcarbonat, Magnesiumsulfat sowie gegebenenfalls ein oder mehrere weitere Trockenmittel, gewählt aus der Gruppe, enthaltend Calciumhydrid, Calciumoxid, Calciumsulfat, Kaliumhydrid, Kieselgel, Magnesiumoxid, Magnesiumchlorat, Natriumhydroxid, Phosphorpentoxid, Schwefelsäure auf Silikat, Phosphorpentoxid auf Silikat, gepackt ist.

11. Verwendung eines Füllmaterials für eine Mikro-Adsorptionssäule nach einem der Ansprüche 1, bis 6 oder einer Mikro-Adsorptionssäule noch einem der Ansprüche 7 bis 10 zum Trocknen und Reinigen von gelösten, organischen bzw. biologischen Analyten, wie Toxinen, Antibiotika, Vitaminen, Hormonen, Pestiziden und dgl. **dadurch gekennzeichnet, dass** das Säulenfüllmaterial bzw. die Säule zum Trocknen und Reinigen einer wäßrigen, organischen Lösung mit einem Wassergehalt von bis zu 30 Gew.-% der organischen bzw. biologischen Analyten, eingesetzt wird.

12. Verwendung eines Füllmaterials für eine Mikro-Adsorptionssäule nach Anspruch 11, **dadurch gekennzeichnet, daß** ein Verhältnis von Füllmaterial für eine Mikro-Adsorptionssäule zu zu behandelnder Analytenlösung wenigstens 2 : 1 bis 1 : 5, insbesondere 1,5 : 1 bis 1 : 2,5, beträgt.

## Claims

1. A packing material for a micro-adsorption column for drying and purifying dissolved organic or biological analytes such as toxins, antibiotics, vitamins, hormones, pesticides and the like, containing at least one desiccant, **characterized in that** the column packing material contains magnesium sulphate and at least one further desiccant selected from the group comprising aluminium oxide, calcium chloride, calcium hydride, calcium oxide, calcium sulphate, potassium hydride, silica gel, copper sulphate, magnesium oxide, magnesium perchlorate, molecular sieves, sodium hydroxide, phosphorus pentoxide, sulphuric acid on silicate, phosphorus pentoxide on silicate, as well as 0.5 to 90 wt.% of a naturally occurring or synthetic carrier with a large internal surface area, selected from zeolites, diatomaceous earths, bentonite, silicon dioxide or the like, and that the packing material for a micro-adsorption column additionally contains at least one adsorbent or detergent selected from the group comprising cyclic, linear or branched C₈ or C₁₈ hydrocarbons substituted with phenyl, cyclohexyl, butyl, ethyl, methyl, cyanopropyl, diol, carboxylate, benzenesulfoxylate, aminopropyl, primary, secondary, tertiary or quaternary amino residues or diethylamine; neutral, acidic or basic aluminium oxide, ion exchangers, silica gel, active carbon or magnesium silicates as well as optionally one or several further desiccants selected from the group comprising calcium hydride, calcium oxide, calcium sulphate, potassium hydride, silica gel, magnesium oxide, magnesium perchlorate, sodium hydroxide, phosphorus pentoxide, sulphuric acid on silicate, phosphorus pentoxide on silicate.

2. A packing material for a micro-adsorption column according to claim 1, **characterized in that** the packing material for a micro-adsorption column contains 5 to 70 wt.% carrier.

3. A packing material for a micro-adsorption column according to claim 1 or 2, **characterized in that** the packing material for a micro-adsorption column is comprised of 0.5 to 90 wt.% carrier, 20 to 60 wt.% magnesium sulphate, 20 to 60 wt.% potassium carbonate and 10 to 35 wt.% calcium chloride.

4. A packing material for a micro-adsorption column according to claim 1, 2 or 3, **characterized in that** the packing material for a micro-adsorption column is used in the form of layers.

5. A packing material for a micro-adsorption column according to any one of claims 1 to 4, **characterized in that** the packing material for a micro-adsorption column contains at least one purification or adsorption layer comprised of a mixture of 0.5 to 90 wt.% carrier, optionally silica gel, and at least one cyclic, linear or branched C₈ or C₁₈ hydrocarbon substituted with phenyl, cyclohexyl, butyl, ethyl, methyl, cyanopropyl, diol, carboxylate, benzenesulfoxylate, aminopropyl, primary, secondary, tertiary or quaternary amino residues or diethylamine, as well as at least one desiccant layer comprised of 0.5 to 90 wt.% carrier, the balance being desiccant.

6. A packing material for a micro-adsorption column according to any one of claims 1 to 5, **characterized in that** the packing material for a micro-adsorption column contains at least one purification or adsorption layer comprised of a mixture of 0.5 to 90 wt.% and, in particular, 5 to 87 wt.% carrier, in particular a diatomaceous earth, 10 to 80 wt.% and, in particular, 25 to 50 wt.% aluminium oxide, 2 to 70 wt.% and, in particular, 8 to 35 wt.% ion exchanger, 10 to 95 wt.% and, in particular, 12 to 70 wt.% active carbon as well as 3 to 65 wt.% and, in particular, 10 to 40 wt.% of at least one cyclic, linear or branched C₈ or C₁₈ hydrocarbon substituted with phenyl, cyclohexyl, butyl, ethyl, methyl, cyanopropyl, diol, carboxylate, benzenesulfoxylate, aminopropyl, primary, secondary, tertiary or quaternary amino residues or diethylamine, as well as at least one desiccant layer comprised of 0.5 to 90 wt.% carrier, the balance being desiccant.

7. A micro-adsorption column for drying and purifying dissolved organic or biological analytes such as toxins, antibiotics, vitamins, hormones, pesticides and the like, containing at least one desiccant, **characterized in that** said column is packed with magnesium sulphate and at least one further desiccant selected from the group comprising aluminium oxide, calcium chloride, calcium hydride, calcium oxide, calcium sulphate, potassium hydride, silica gel, copper sulphate, magnesium oxide, magnesium perchlorate, molecular sieves, sodium hydroxide, phosphorus pentoxide, sulphuric acid on silicate, phosphorus pentoxide on silicate, as well as 0.5 to 90 wt.% of a naturally occurring or synthetic carrier with a large internal surface area, such as zeolites, diatomaceous earths, bentonite, silicon dioxide or the like, and that at least one of the layers is a desiccant-containing layer and at least one of the layers is a detergent- or adsorbent-containing layer, the detergent or adsorbent being selected from the group comprising cyclic, linear or branched C₈ or C₁₈ hydrocarbons substituted with phenyl, cyclohexyl, butyl, ethyl, methyl, cyanopropyl, diol, carboxylate, benzenesulfoxylate, aminopropyl, primary, secondary, tertiary or quaternary amino residues or diethylamine; neutral, acidic or basic aluminium oxide, an ion exchanger, silica gel, active carbon or magnesium silicate.

8. A micro-adsorption column according to claim 7, **characterized in that** the column is packed with 5 to 70 wt.% carrier.

9. A micro-adsorption column according to claim 7 or 8, **characterized in that** the column, on its feed end, outflow end and optionally between the layers, is each equipped with a filter layer selected from a frit, filter paper, membrane or diaphragm.

10. A micro-adsorption column according to claim 7, 8 or 9, **characterized in that** the column is packed, from its feed end to its outflow end, with a first purification or absorbent layer containing 0.5 to 90 wt.% carrier, silica gel as well as, optionally, aluminium oxide and/or an ion exchanger, a first desiccant layer comprised of 0.5 to 90 wt.% carrier, magnesium sulphate, as well as one or several further desiccants selected from the group of aluminium oxide, calcium chloride, calcium sulphate, potassium hydride, silica gel, copper sulphate, magnesium oxide, molecular sieves, sodium hydroxide, phosphorus pentoxide, sulphuric acid on silicate, phosphorus pentoxide on silicate, a second purification or adsorbent layer containing 0.5 to 90 wt.% carrier as well as at least one cyclic, linear or branched and substituted C₈ or C₁₈ hydrocarbon as well as optionally active carbon, and a second desiccant layer containing 0.5 to 90 wt.% carrier and a desiccant selected from calcium chloride, potassium carbonate, magnesium sulphate as well as optionally one or several further desiccants selected from the group comprising calcium hydride, calcium oxide, calcium sulphate, potassium hydride, silica gel, magnesium oxide, magnesium perchlorate, sodium hydroxide, phosphorus pentoxide, sulphuric acid on silicate, phosphorus pentoxide on silicate.

11. The use of a packing material for a micro-adsorption column according to any of claims 1 to 6, or of a micro adsorption column according to any one of claims 8 to 13, for drying and/or purifying dissolved organic or biological analytes such as toxins, antibiotics, vitamins, hormones, pesticides and the like, wherein the column packing material or column, respectively, is used for drying and/or purifying an aqueous organic solution having a water content of up to 30 wt.% of the organic or biological analytes.

12. The use of a packing material for a micro-adsorption column according to claim 11, wherein the ratio of the micro-adsorption column packing material to the analyte solution to be treated is at least 2:1 to 1:5 and, in particular, 1.5:1 to 1:2.5.

## Revendications

1. Matériau de charge pour une colonne de micro-adsorption pour le séchage et la purification d'analytes organiques ou biologiques dissous tels que des toxines, des antibiotiques, des vitamines, des hormones, des pesticides et analogues, contenant au moins un desséchant, **caractérisé en ce que** le matériau de charge contient du sulfate de magnésium et au moins un autre desséchant choisi dans le groupe comprenant l'oxyde d'aluminium, le chlorure de calcium, l'hydrure de calcium, l'oxyde de calcium, le sulfate de calcium, l'hydrure de potassium, le gel de silice, le sulfate de cuivre, l'oxyde de magnésium, le perchlorate de magnésium, les tamis moléculaires, l'hydroxyde de sodium, le pentoxyde de phosphore, l'acide sulfurique sur silicate, le pentoxyde de phosphore sur silicate et 0,5 à 90 % en poids d'un support existant à l'état naturel ou synthétique présentant une surface interne importante, choisi parmi les zéolithes, les terres de diatomées, la bentonite ou le dioxyde de silicium et **en ce que** le matériau de charge pour une micro-colonne d'adsorption contient en outre au moins un adsorbant ou agent de purification choisi dans le groupe comprenant un hydrocarbure en C₈ à C₁₈ cyclique, à chaîne linéaire ou ramifiée, substitué par des groupes phényle, cyclohexyle, butyle, éthyle, méthyle, cyanopropyle, diol, carboxylate, benzène-sulfoxylate, aminopropyle, des radicaux amino primaires, secondaires, tertiaires ou quaternaires ou un groupe diéthylamine ; un oxyde d'aluminium neutre, acide ou basique, des échangeurs d'ions, un gel de silice, du charbon actif ou du silicate de magnésium et éventuellement un ou plusieurs autre(s) desséchants choisis dans le groupe comprenant l'hydrure de calcium, l'oxyde de calcium, le sulfate de calcium, l'hydrure de potassium, le gel de silice, l'oxyde de magnésium, le perchlorate de magnésium, l'hydroxyde de sodium, le pentoxyde de phosphore, l'acide sulfurique sur silicate, le pentoxyde de phosphore sur silicate.

2. Matériau de charge pour une colonne de micro-adsorption selon la revendication 1, **caractérisé en ce que** le matériau de charge pour une colonne de micro-adsorption contient 5 à 70 % en poids de support.

3. Matériau de charge pour une colonne de micro-adsorption selon la revendication 1 ou 2, **caractérisé en ce que** le matériau de charge pour une colonne de micro-adsorption est constitué de 0,5 à 90 % en poids de support, de 20 à 60 % en poids de sulfate de magnésium, de 20 à 60 % en poids de carbonate de potassium et de 10 à 35 % en poids de chlorure de calcium.

4. Matériau de charge pour une colonne de micro-adsorption selon la revendication 1, 2 ou 3, **caractérisé en ce que** le matériau de charge pour une colonne de micro-adsorption est utilisé sous forme de couches.

5. Matériau de charge pour une colonne de micro-Adsorption selon l'une des revendications 1 à 4, **caractérisé en ce que** le matériau de charge pour une colonne de micro-adsorption contient au moins une couche de purification ou d'adsorption consistant en un mélange de 0,5 à 90 % en poids de support, éventuellement du gel de silice, et d'au moins un hydrocarbure en C₈ à C₁₈ cyclique, à chaîne linéaire ou ramifiée, substitué par des groupes phényle, cyclohexyle, butyle, éthyle, méthyle, cyanopropyle, diol, carboxylate, benzène-sulfoxylate, aminopropyle, des radicaux amino primaires, secondaires, tertiaires ou quaternaires ou un groupe diéthylamine et au moins une couche de desséchant constituée de 0,5 à 90 % en poids de support et de desséchant résiduel.

6. Matériau de charge pour une colonne de micro-adsorption selon l'une des revendications 1 à 5, **caractérisé en ce que** le matériau de charge pour une colonne de micro-adsorption contient au moins une couche de purification ou d'adsorption consistant en un mélange de 0,5 à 90 % en poids, en particulier de 5 à 87 % en poids de support, en particulier une terre de diatomée, 10 à 80 % en poids, en particulier 25 à 50 % en poids d'oxyde d'aluminium, 2 à 70 % en poids, en particulier 8 à 35 % en poids d'échangeur d'ions, 10 à 95 % en poids, en particulier 12 à 70 % en poids de charbon actif et 3 à 65 % en poids, en particulier 10 à 40 % en poids d'au moins un hydrocarbure en C₈ à C₁₈ cyclique, à chaîne linéaire ou ramifiée, substitué par des groupes phényle, cyclohexyle, butyle, éthyle, méthyle, cyanopropyle, diol, carboxylate, benzène-sulfoxylate, aminopropyle, des radicaux amino primaires, secondaires, tertiaires ou quaternaires ou un groupe diéthylamine et au moins une couche de desséchant constituée de 0,5 à 90 % en poids de support et de desséchant résiduel.

7. Matériau de charge pour une colonne de micro-adsorption pour le séchage et la purification d'analytes organiques ou biologiques dissous tels que des toxines, des antibiotiques, des vitamines, des hormones, des pesticides et analogues, contenant au moins un desséchant, **caractérisé en ce que** la colonne est chargée d'au moins deux couches, **en ce que** la colonne contient du sulfate de magnésium et au moins un autre desséchant choisi dans le groupe comprenant l'oxyde d'aluminium, le chlorure de calcium, l'hydrure de calcium, l'oxyde de calcium, le sulfate de calcium, l'hydrure de potassium, le gel de silice, le sulfate de cuivre, l'oxyde de magnésium, le perchlorate de magnésium, les tamis moléculaires, l'hydroxyde de sodium, le pentoxyde de phosphore, l'acide sulfurique sur silicate, le pentoxyde de phosphore sur silicate et 0,5 à 90 % en poids d'un support existant à l'état naturel ou synthétique présentant une surface interne importante, choisi parmi les zéolithes, les terres de diatomées, la bentonite ou le dioxyde de silicium et **en ce qu'**au moins l'une des couches est une couche contenant un desséchant et au moins l'une des couches est une couche contenant un agent de purification ou un adsorbant, l'agent de purification ou l'adsorbant étant choisi dans le groupe comprenant des hydrocarbures en C₈ à C₁₈ cycliques, à chaîne linéaire ou ramifiée, substitué par des groupes phényle, cyclohexyle, butyle, éthyle, méthyle, cyanopropyle, diol, carboxylate, benzène-sulfoxylate, aminopropyle, des radicaux amino primaires, secondaires, tertiaires ou quaternaires ou un groupe diéthylamine ; un oxyde d'aluminium neutre, acide ou basique, des échangeurs d'ions, un gel de silice, du charbon actif ou du silicate de magnésium.

8. Colonne de micro-adsorption selon la revendication 7, **caractérisée en ce que** la colonne est chargée de 5 à 70 % en poids de support.

9. Colonne de micro-adsorption selon la revendication 7 ou 8, **caractérisée en ce que** la colonne est dotée à l'orifice d'entrée, à l'orifice de sortie et éventuellement, entre les couches, d'une couche de filtrage respective choisie parmi une fritte, un papier filtre, une membrane ou un diaphragme.

10. Colonne de micro-adsorption selon la revendication 7, 8 ou 9, **caractérisée en ce que** la colonne est chargée, de l'orifice d'entrée à l'orifice de sortie, d'une couche de purification et d'adsorption, contenant 0,5 à 90 % en poids de support, de gel de silice et éventuellement d'oxyde d'aluminium et/ou d'un échangeur d'ions, d'une première couche de desséchant constituée de 0,5 à 90 % en poids de support, de sulfate de magnésium et d'un ou plusieurs autres desséchants choisi dans le groupe comprenant l'oxyde d'aluminium, l'oxyde de calcium, le sulfate de calcium, l'hydrure de potassium, le gel de silice, le sulfate de cuivre, l'oxyde de magnésium, un tamis moléculaire, l'hydroxyde de sodium, le pentoxyde de phosphore, l'acide sulfurique sur silicate, le pentoxyde de phosphore sur silicate, d'une deuxième couche de purification ou d'adsorption contenant 0,5 à 90 % en poids d'un support et d'au moins un hydrocarbure en C₈ à C₁₈ cyclique, à chaîne linéaire ou ramifié substitué et éventuellement du charbon actif et d'une deuxième couche de desséchant contenant 0,5 à 90 % en poids de support, et un desséchant choisi dans le groupe comprenant le chlorure de calcium, le carbonate de potassium, le sulfate de magnésium et éventuellement un ou plusieurs autre(s) desséchant(s) choisis dans le groupe comprenant l'hydrure de calcium, l'oxyde de calcium, le sulfate de calcium, l'hydrure de potassium, le gel de silice, l'oxyde de magnésium, le chlorate de magnésium, l'hydroxyde de sodium, le pentoxyde de phosphore, l'acide sulfurique sur silicate, le pentoxyde de phosphore sur silicate.

11. Utilisation d'un matériau de charge pour une colonne de micro-adsorption selon l'une des revendications 1 à 6, ou d'une colonne de micro-adsorption selon l'une des revendications 7 à 10, pour le séchage et la purification d'analytes organiques ou biologiques dissous tels que des toxines, des antibiotiques, des vitamines, des hormones, des pesticides et analogues, contenant au moins un desséchant, **caractérisée en ce que** le matériau de charge de colonne ou la colonne est utilisé(e) pour le séchage et la purification d'une solution organique aqueuse présentant une teneur en eau allant jusqu'à 30 % en poids des analytes organiques ou biologiques.

12. Utilisation d'un matériau de charge pour une colonne de micro-adsorption selon la revendication 11, **caractérisée en ce que** le rapport du matériau de charge pour une colonne de micro-adsorption à la solution d'analyte à traiter est d'au moins 2 : 1 à 1 : 5, en particulier de 1,5 : 1 à 1 : 2,5.
